# EUROPÄISCHE PATENTSCHRIFT

(11) **EP 1 062 112 B1**
(45) Veröffentlichungstag und Bekanntmachung des Hinweises auf die Patenterteilung: **31.03.2004**
(21) Anmeldenummer: 99907623.5
(22) Anmeldetag: 11.03.1999
(51) Int. Cl.: B60K 26/02

(54) **BETÄTIGUNGSVORRICHTUNG FÜR EIN KRAFTFAHRZEUG**
MOTOR VEHICLE ACTUATING DEVICE
DISPOSITIF D'ACTIONNEMENT POUR VEHICULE AUTOMOBILE

(30) Priorität: 11.03.1998 DE 19811268
(43) Veröffentlichungstag der Anmeldung: 27.12.2000
(73) Patentinhaber: Medizinische Innovationen, 81377 München (DE)
(72) Erfinder: LOB, Helke, D-81377 München (DE)
(74) Vertreter: Eisenführ, Speiser & Partner
(86) Internationale Anmeldenummer: PCT/EP1999/001585
(87) Internationale Veröffentlichungsnummer: WO 1999/046138

(56) Entgegenhaltungen:
- WO-A-92/05482
- WO-A-95/27237
- DE-A- 19 625 501
- US-A- 4 639 710
- US-A- 5 461 355
- PATENT ABSTRACTS OF JAPAN vol. 013, no. 164 (E-745), 19. April 1989 & JP 63 318030 A (HITACHI LTD), 26. Dezember 1988
- VDO-Querschnitt 4, "Intelligente Regelung in der Motor-Peripherie", VDO Adolf Schindling AG, Schwalbach (DE), März 1981, Seiten 7-14

## Beschreibung

Die Erfindung betrifft eine Betätigungsvorrichtung zum Ansteuern des Antriebs-, Lenk- oder Verzögerungsmittels eines Kraftfahrzeugs gemäß dem Oberbegriff des Anspruchs 1.

Eine Betätigungsvorrichtung mit den Merkmalen des Oberbegriffs des Anspruchs 1 ist aus der US 4 639 710 A bekannt.

Bekannte derartige Betätigungsvorrichtungen sind meist als Fußpedal ausgestaltet, welches über eine Hebelübersetzung und einen Seilzug oder auch eine hydraulische Leitung den Pedaldruck zu dem zu aktivierenden Element überträgt.

Von bekannten Pedalen und von damit verbundenen angeschlossenen Gestängen geht jedoch im Falle eines Unfall mit Verformung der Fahrgastzelle eine große Verletzungsgefahr ausgeht. Diese Verletzungsgefahr kann aus konstruktiven Gründen auch nicht durch Knautschzonen oder andere Verformungsbereiche verringert werden, da der dafür zur Verfügung stehende Raum beschränkt ist.

Der Erfindung liegt deshalb die Aufgabe zugrunde, eine fußbetätigte Betätigungsvorrichtung für ein Kraftfahrzeug zu entwickeln, welche aufgrund ihrer konstruktiven Ausführung bei einem Frontalaufprall des Kraftfahrzeugs Fußverletzungen des Fahrzeugführers im wesentlichen ausschließt.

Die Aufgabe wird durch die im Anspruch 1 angegebenen Merkmale gelöst.

Die Erfindung schließt die technische Lehre ein, daß zur Betätigung von Antriebs-oder Verzögerungsmitteln bei einem Kraftfahrzeug ein mit einem elastischen und leitenden Formkörper versehener Signalwandler vorgesehen ist, wobei der Formkörper zwei, auf einander gegenüberliegenden Formkörperoberflächen aufgebrachte elektrische Kontaktbereiche mit jeweils einer Zuleitung aufweist, und die Zuleitungen in einen Meßwandler geführt werden, an dessen Ausgang ein Steuersignal als Maß für den elektrischen Widerstand anliegt.

Damit wird ein Betätigungmittel geschaffen, welches im Normalbetrieb bei Kompression mittels Fußdrucks seinen Widerstand verringert und ein Steuersignal abgibt, wie es bisher durch Betätigung des Gas-, Brems- oder Kuppungspedals erzeugt wurde. In entsprechenden Luftfahrzeugen wird entsprechend das Seitenruder betätigt. Im Falle einer Kollision dient die Kompression dem Verzehr von auf die Füße der Bedienungsperson wirkenden Stoßes bei Verformung des Fahrzeugs und verringert somit das Verletzungsrisiko.

In einer bevorzugten Ausführungsform der Erfindung besteht der Formkörper aus einem elastischen Material. Vorteilhaft ist das elastische Material dabei porös ausgebildet, wobei die Poren durchaus eine unregelmäßige Anordnung aufweisen können. Für die Häufigkeitsverteilung der Größe der Poren ist dabei eine Varianz vorzusehen, welche nicht Null ist. Bei einer günstigen Variante besteht der Formkörper aus einem Elastomer.

Vorzugsweise besteht der Formkörper aus zwei Teilformkörpern, welche leitend übereinander angeordnet sind. Die Teilformkörper sind auf der jeweils dem anderen Teilformkörper abgewandten Oberfläche vollständig mit je einem elektrischen Kontaktbereich versehen. Der jeweilige Kontaktbereich ist dabei leitend einerseits mit dem entsprechenden Formkörper, andererseits mit je einer Zuteilung verbunden.

Vorteilhaft sind die Elastizitätsmodule der die Teilformkörper bildenden Materialien unterschiedlich groß, wobei die Teilformkörper entlang einer Verbindungslinie zwischen den beiden Kontaktbereichen unterschiedliche Ausdehnungen in der Art aufweisen, daß ein als Druckpunkt bezeichneter Abstand der beiden Kontaktbereiche auftritt, an dem nur einer der beiden Teilformkörper im wesentlichen vollständig komprimiert ist.

In einer vorteilhaften Ausführung ist der mit den entsprechenden Kontaktbereichen und Zuleitungen versehene Formkörper von einem isolierenden Material umgeben. Das Material ist dabei in der Art vorzusehen, daß die jeweils die Kontaktbereiche bedeckenden Flächen ausgesteift sind, so daß ein lokal in dem ausgesteiften Bereich ausgeübter Druck im wesentlichen gleichmäßig über den ausgesteiften Bereich verteilt in den Formkörper eingeleitet wird. Das die übrigen Bereiche des Formkörpers umhüllende Material ist nachgiebig ausgebildet.

Entsprechend einer günstigen Weiterbildung der Erfindung weist der Signalwandler einer beliebigen Betätigungsvorrichtung einen Formkörper aus einem Cellpolyurethan oder Cellvulkulan auf, dessen elektrischer Widerstand sich bei einer Volumenkompression verringert. Dieser Werkstoff nimmt mit seiner progressiven Verfomung wesentliche Energie auf, so daß auf die Füße der Bedienungsperson wirkende Stoßenergie abgebaut wird.

Die Zellstruktur des aus einem Elastomer bestehenden Formkörpers ist durch eine homogene Überlagerung zweier Strukturelemente gebildet. Der Formkörper ist porös ausgebildet, wobei die Poren unregelmäßig verteilt angeordnet sind. In den Poren des Elastomers sind dazu Kugeln, bevorzugt Hohlkugeln, eingelagert, welche selbst kompressibel und elektrisch leitend ausgebildet sind. Dadurch ergibt sich in vorteilhafter Weise, daß eine Verringeruung des elektrischen Widerstands durch eine größere Anzahl von Kontaktstellen innerhalb des komprimierten Formkörpers.

Auf den Formkörper ist ein erster Kontaktbereich aufgebracht, welcher sich über die gesamte, dem Fahrer zugewandte Oberfläche erstreckt und leitend mit dem Formkörper verbunden ist. Der Kontaktbereich ist weiterhin mit einer Zuleitung versehen, die durch den Formkörper hindurch aus dem Signalwandler nach außen geführt ist. Ein zweiter, dem ersten gegenüberliegend angeordneter, Kontaktbereich des Formkörpers ist mit einer Zuleitung leitend verbunden. Der Formkörper 61 ist mit einem isolierenden Material in der Art eines Gehäuses umschlossen, wobei das Material im Bereich der die Kontaktbereiche bedeckenden Wandungsbereiche des Gehäuses steif und in den übrigen Wandungsbereichen nachgiebig ausgebildet ist. Somit wird ein lokal in dem ausgesteiften Bereich ausgeübter Druck im wesentlichen gleichmäßig über den ausgesteiften Bereich verteilt in den Formkörper eingeleitet.

Durch die Erfindung besteht die vorteilhafte Möglichkeit ein neuartiges Betätigungselement, welches sich vorteilhaft in die elektronische Signalverarbeitung der heutigen Kraftfahrzeugtechnik integrieren läßt, so auszulegen, daß es im Falle eines Unfalls ein Sicherheitselement bildet.

Aufgrund des zusätzlichen Einschlusses von elastischen, kugelförmigen Elementen in den Poren des Elastomers, bevorzugt Cellpolyurethan oder Cellvulkulan, kann der Formkörper eine günstig verlaufende Kompressionskennlinie auf. Dieser Verlauf der Kompressionskennlinie des Formkörpers, welcher beispielsweise eine kompressibel stoßverzehrende Fußraumauskleidung in einem Kraftfahrzeug mit einer maximalen Energieaufnahme im Endverformungsbereich bildet, weist insbesondere einen Anfangsbereich auf, wo der Formkörper fein dosierbar verformt werden kann und ein im wesentlichen linearer Zusammenhang zwischen aufgenommer Energie E und Kompressionshub S besteht.

Wenn der Elastomerkörper porös oder die Einschlüsse als leitende Hohlkörper ausgebildet sind, ist der Variationsbereich des sich bei Kompression des Körpers verändernden elektrischen Widerstands vergrößert. Die Poren oder Innenräume bilden damit Kontaktflächen, welche sich bei Kompression zunehmend berühren und damit den elektrischen Widerstand der Gesamtanordnung wegen der sich verkürzenden vom elektrischen Strom zu durchquerenden Wege deutlich senken.

Da die stoßverzehrende Fußraumauskleidung auf maximale Energieverzehrung im Endverformungsbereich ausgelegt ist, besteht dagegen bei einem großen Kompressionshub S ein funktioneller Zusammenhang derart, daß die beim Komprimieren durch die Fußraumauskleidung aufgenommene mechanische Energie E überproportionaler ansteigt. Die Kompressionskennlinie weist im Bereich der starken Kompression einen im wesentlichen quadratischen oder exponentiellen Kennlinienverlauf auf.

In einer günstigen Variante ist der, wie vorstehend beschrieben aufgebaute Signalwandler im Bereich eines ersten Kontaktbereiches geriffelt oder in sonstiger Weise mit einer den Reibbeiwert erhöhenden Oberflächenbeschichtung versehen, so daß der Fuß rutschfesten Halt darauf findet.

Vorzugsweise ist dem Signalwandler ein Meßwandler nachgeordnet, dessen Eingänge über die Zuleitungen mit dem ersten und einem zweiten Kontaktbereich verbunden sind. Der Meßwandler enthält eine Spannungsquelle, die zwischen dem ersten und dem zweiten Kontaktbereich eine im wesentlichen konstante elektrische Spannung anlegt. In einer anderen günstigen Ausführung ist eine Stromquelle vorgesehen, die zwischen dem ersten und dem zweiten elektrischen Kontaktbereich einen elektrischen Strom mit im wesentlichen konstanter Amplitude hervorruft. Vorzugsweise ist ein Wandler vorhanden, welcher eingangsseitig mit den Zuleitungen verbunden ist, und an dessen Ausgang eine analoge elektrische Kenngröße abgegeben wird. Die analoge elektrische Kenngröße wird vorteilhaft einem Eingangsverstärker zugeführt, welcher die analoge elektrische Kenngröße als Maß für den elektrischen Widerstand in ihrer Amplitude heraufsetzt. In einer günstigen Variante besitzt der Meßwandler einen Analog-Digital-Wandler, welcher die analoge Kenngröße als Eingangssignal aufnimmt und sie als digitale Kenngröße ausgibt.

Vorzugsweise ist ein Funktionsgeber vorgesehen, dem die analoge oder digitale Kenngröße übergeben wird, und an dessen Ausgang ein mit der Kenngröße bzw. deren zeitlicher Änderung in eindeutigem Zusammenhang stehendes Steuersignal anliegt. In einer günstigen Variante weist der Funktionsgeber einen Speicher auf, dem die analoge oder digitale Kenngröße zugeführt wird. Desweiteren ist eine Differenzierstufe vorgesehen, welche die aktuelle und eine aus dem Speicher abgerufene vorherige Kenngröße als Eingangssignale aufnimmt, und eine Differenziergröße, die ein Maß für die zeitliche Änderung der Kenngröße darstellt, ausgibt. Vorteilhaft weist der Funktionsgeber ein Linearisierungsglied auf, dem die Kenngröße oder die Differenziergröße als Eingangssignal übergeben wird, und an dessen Ausgang das Steuersignal anliegt. Dieses Steuersignal aktiviert im Endeffekt das Antriebs- oder Verzögerungsmittel.

In einer günstigen Ausführung ist zur Steuerung des Antriebs- oder Verzögerungsmittels in Abhängigkeit einer vorgegebenen Kenngröße eine erste Schwellwertstufe vorgesehen, die die Kenngröße als Eingangssignal aufnimmt und ein Steuersignal abgibt, welches einen ersten Kennwert besitzt, wenn die Kenngröße größer oder gleich ist als ein vorbestimmter Kenngrößenschwellwert bzw. einen zweiten Kennwert besitzt, wenn die Kenngröße kleiner ist als der vorbestimmte Kenngrößenschwellwert. Bei einer weiteren günstigen Variante weist der Funktionsgeber zur Steuerung des Antriebs-oder Verzögerungsmittels in Abhängigkeit einer vorgegebenen Differenziergröße eine zweite Schwellwertstufe auf, die die Differenziergröße als Eingangssignal aufnimmt und ein Steuersignal ausgibt, das einen konstanten ersten Differenzierwert hat, wenn die Differenziergröße größer oder gleich ist als ein vorbestimmter Differenziergrößenschwellwert, und das einen zweiten Differenzierwert hat, wenn die Differenziergröße kleiner ist als der vorbestimmte Differenziergrößenschwellwert.

Vorteilhaft besitzt der Funktionsgeber außerdem einen Tabellenspeicher, in dem jedem digitalen Wert der Kenngröße und/oder der Differenziergröße ein entsprechnder Wert des Steuersignals zugeordnet wird.
In einer günstigen Ausführungsform enthält der Meßwandler weiterhin eine Ausgangsstufe, welche das Steuersignal aufnimmt und in seiner Amplitude heraufsetzt.

Vorzugsweise ist eine Vorrichtung vorgesehen, die die Ableitung der Änderung des vom Steuersignal bestimmten elektrischen Widerstandes erfaßt, und die bei einer schnellen Änderung des elektrischen Widerstandes die Beschleunigung des Kraftfahrzeugs erhöht, so daß ein Kick-down Effekt erzeugt wird.

In einer vorteilhaften Variante sind drei Betätigungsvorrichtungen vorgesehen, wobei eine erste Betätigungsvorrichtung den Fahrzeugmotor, eine zweite Betätigungsvorrichtung das Bremssystem und eine dritte Betätigungsvorrichtung die Kupplung beeinflußt. Die Signalwandler der Betätigungsvorrichtungen sind dabei vorzugsweise in einen Gesamtformkörper integriert, wobei die Betätigungsflächen der Betätigungsvorrichtungen in einer Oberfläche des Gesamtformkörpers in der Art nebeneinander angeordnet sind, daß die Betätigungsfläche der ersten Betätigungsvorrichtung sich rechts, die der zweiten Betätigungsvorrichtung sich in der Mitte und die der dritten Betätigungsvorrichtung sich links befindet. In einer günstigen Ausführung ist die Betätigungsfläche der zweiten Betätigungsvorrichtung wesentlich größer als die Betätigungsflächen der anderen Vorrichtungen ausgebildet. Desweiteren ist zwischen den Betätigungsflächen der zweiten und dritten Betätigungsvorrichtung ein größerer Abstand zu wählen als zwischen den Betätigungsflächen der ersten und zweiten Betätigungsvorrichtung. Die aus den drei Betätigungsvorrichtungen gebildete Betätigungsgruppe ist in die den Fußraum in Fahrtrichtung begrenzende Stirnwand fahrerseitig in der Art eingefügt, daß die drei Betätigungsflächen zum Fahrer weisen.

In einer anderen Ausführungsform der Erfindung besteht der Formkörper aus einem geschlossenen, in seinem Volumen veränderbaren Gehäuse, welches in die Stirnwand eingelassen ist. Die Betätigungsvorrichtung weist dabei einen mattenförmig ausgelegten Druckaufnehmer auf, welcher vom Fußraum der Fahrgastzelle des Kraftfahrzeugs her für den Fahrer zugänglich an dem Gehäuse befestigt ist. Das Gehäuse ist zweiteilig und vorzugsweise quaderförmig ausgebildet. Es weist ein napfförmiges Bodenteil und einen ebenso geformten Deckel auf. Die Wandungen des Bodenteils und des das Bodenteil übergreifenden Deckels sind in Form einer Führung miteinander verbunden und gegeneinander verschieblich angeordnet. Die Gehäuseteile sind dabei steif ausgebildet.

Im Inneren des Gehäuses sind mehrere Federelemente vorgesehen, über weiche sich der den Druckaufnehmer tragende Gehäusedeckel am Boden abstützt und welche den Gehäusedeckel nach erfolgter Druckbelastung in seine Ausgangsposition verbringen. Durch die Wirkung der Federelemente wird bei der die Betätigungsvorrichtung betätigenden Person darüberhinaus in psychologisch günstiger Weise der Eindruck des Vorhandenseins einer herkömmlichen Pedalkonstruktion erzeugt, obwohl die die Betätigungsvorrichtung belastende Kraft nicht direkt auf das Antriebs- oder Verzögerungsmittel des Kraftfahrzeugs wirkt, sondern in ein, vorzugsweise elektrisches Steuersignal gewandelt wird, welches seinerseits das Antriebs- oder Verzögerungsmittel aktiviert.

Entsprechend einer günstigen Weiterbildung der Erfindung sind die Federelemente als gerade Schraubenfedern mit nichtlinearer Kennlinie ausgebildet, wodurch der Gegendruck der Federelemente bei starker Druckbelastung des Druckaufnehmers, d.h. bei stärkerer Reduzierung des Gehäusevolumens, zunimmt und den Eindruck des Vorhandenseins einer konventionellen Pedalanordnung zum Betätigen des Antriebs- oder Verzögerungsmittels eines Kraftfahrzeugs verstärkt.

Der flächenförmige Druckaufnehmer ist nach einer anderen Weiterbildung der vorstehend beschriebenen Ausführungsform der Erfindung konstruktiv derart ausgebildet, daß er als Bau-Einheit einen druckabhängig veränderlichen elektrischen Widerstand, eine durch eine druckabhängige Verformung variable Kapazität oder Induktivität darstellt. Die Änderung der entsprechenden Widerstands-, Kapazitätsund Induktivitätswerte führt beispielsweise durch Veränderung des Gleichgewichts einer Widerstandbbrücke bzw. der Verstimmung eines Resonanzkreises zu Spannungsänderungen, welche nach Verstärkung als Steuerspannung zur Aktivierung des Motors, der Bremse bzw. der Kupplung des Kraftfahrzeugs nutzbar ist.

Gleichermaßen ist auch ein als hydraulisches System ausgebildeter Druckaufnehmer einsetzbar, bei dem mittels eines hydraulischen Mediums druckabhängig über Kontaktmittel unterschiedliche Steuerspannungen aktiviert werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine perspektivische Darstellung einer Betätigungsgruppe mit drei Betätigungsvorrichtungen zur Steuerung einer Brems-oder Kupplungsvorrichtung, wobei die jeweilige Betätigungsvorrichtung ein volumen-veränderliches Gehäuse mit einem aufgebrachten Druckaufnehmer aufweist,
- Figur 2: die Darstellung eines Schnittes längs der Linie A...A gemäß Figur 1,
- Figur 3: ein Blockschaltbild für die Steuerung einer Brems- oder Kupplungsvorrichtung eines Kraftfahrzeugs mittels einer Betätigungsvorrichtung gemäß Figur 1,
- Figur 4: eine perspektivische Darstellung einer Betätigungsgruppe mit drei Betätigungsvorrichtungen zur Steuerung eines Antriebs- oder Verzögerungsmittels, wobei die jeweilige Betätigungsvorrichtung einen aus einem elastischen Material bestehenden Formkörper aufweist, entsprechend der bevorzugten Ausführungsform,
- Figur 5: die Darstellung eines Schnittes längs der Linie B...B gemäß Figur 4,
- Figur 6: eine Betätigungsvorrichtung gemäß Figur 4 als Blockschaltbild,
- Figur 7: eine günstige Weiterbildung der Erfindung in Darstellung eines Schnittes längs der Linie B...B gemäß Figur 4, sowie
- Figur 8: eine Kompressionskennlinie des in Figur 7 gezeigten Weiterbildung der Erfindung.

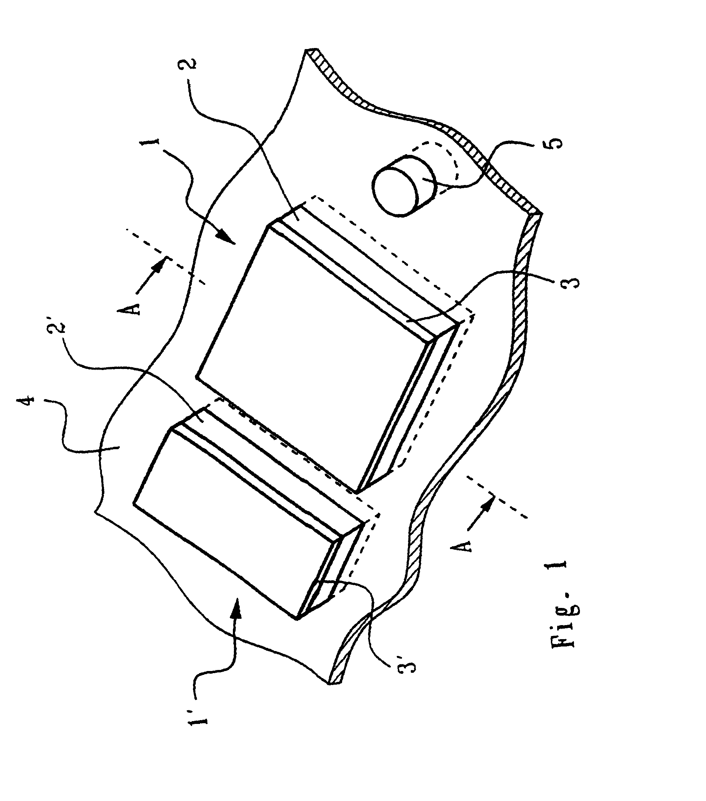

In dem in Figur 1 perspektivisch dargestellten Teilbereich einer zwischen Motor- und Fahrgastraum eines Kraftfahrzeugs vorgesehenen Stirnwand 4 ist die Position einer erfindungsgemäßen Betätigungsvorrichtung 1;1' für die (nicht dargestellte) Brems-oder Kupplungsvorrichtung eines Kraftfahrzeugs gezeigt. Die Betätigungsvorrichtungen 1; 1' weisen jeweils ein quaderförmiges Gehäuse 2; 2' auf, an dessen in den Fußbereich des Fahrgastraums ragenden, sich in einer zur Stirnwand 4 parallelen Ebene erstreckenden Wandungsabschnitt ein Druckaufnehmer 3; 3' befestigt ist.

Der jeweilige Druckaufnehmer 3; 3' ist als Teil eines elektrischen oder pneumatischen Wandler-Systems in der Lage, bei Druckauflastung eine elektrische Steuerspannung auszulösen, welche die Brems- oder Kupplungvorrichtung des Kraftfahrzeugs aktiviert. Das den mattenförmig ausgebildeten Druckaufnehmer 3; 3' tragende Gehäuse 2; 2' der jeweiligen Betätigungsvorrichtung 1; 1' ist senkrecht zu der von der Stirnwand 4 aufgespannten Ebene verschieblich angeordnet und wird vollständig in die Stirnwand 4 versenkt, wenn eine maximale Druckkraft an dem Druckaufnehmer 3; 3' anliegt oder dieser im Falle eines Frontalaufpralls des Kraftfahrzeugs durch Füße oder Beine des Fahrzeugführers belastet wird. Durch eine derartige Ausbildung und Anordnung einer Betätigungsvorrichtung 1; 1' wird in vorteilhafter Weise die Gefahr einer von der Betätigungsvorrichtung bewirkten Fußverletzung für den Fahrzeugführer bei einem Frontalaufprall des Fahrzeugs im wesentlichen ausgeschlossen. Zusätzlich zu den Betätigungsvorrichtungen 1; 1' ist eine Betätigungsvorrichtung 5 zur Betätigung des Fahrzeugmotors schematisiert dargestellt.

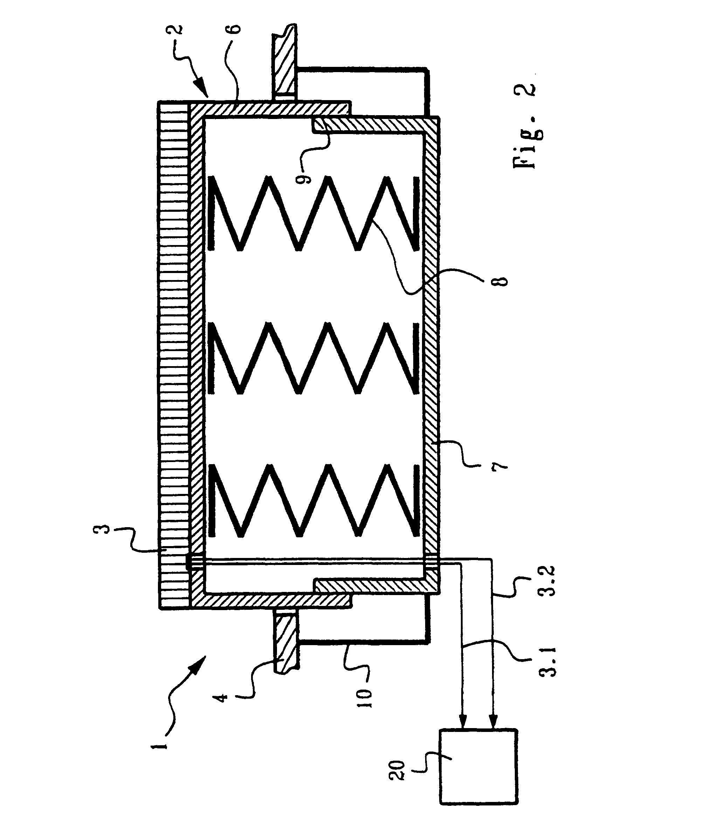

In Figur 2 ist die Betätigungsvorrichtung 1 als schematisierte Ansicht eines Schnittes längs der Linie A...A gemäß Figur 1 dargestellt. Das Gehäuse 2 der Betätigungsvorrichtung 1 ist mittels einer an der dem Motorraum zugewandten Seite der Stirnwand 4 vorgesehenen Halterung befestigt. Das zweiteilig ausgebildete, quaderförmige Gehäuse 2 weist ein napfförmiges Bodenteil 7 und einen ebenfalls napfförmig ausgebildeten und das Bodenteil übergreifenden Deckel 6 auf. Bodenteil 7 und Deckel 6 sind durch eine Geradführung 9 miteinander verbunden.

Der Gehäusedeckel 6 trägt auf seiner Frontseite den mattenartig ausgebildeten Druckaufnehmer 3. Im Inneren des Gehäuses 2 sind in symmetrischer Anordnung drei Federelemente 8 angeordnet, auf denen sich der Deckel 6 auf dem Gehäuseboden 7 abstützt, wenn der Druckaufnehmer 3 bestimmungsgemäß belastet wird. Die Federelemente sind als gerade Schraubenfedern ausgebildet und führen den Gehäusedeckel 6 in seine Ausgangsposition zurück, wenn die Betätigungsvorrichtung 1 keiner Druckauflastung mehr unterworfen ist. Durch eine nichtlineare Kennlinie der Federelemente 8 wird in günstiger Weise ein für die Druckauflastung ausreichend großer Gegendruck erzeugt und gleichzeitig beim Bedienen durch den Fahrzeugführer ein Verhalten der erfindungsgemäßen Betätigungsvorrichtung 1 erreicht, welches im wesentlichen dem einer mit Pedalen ausgerüsteten Betätigungsvorrichtung entspricht.

Die durch die Federelemente 8 und die Geradführung 9 gesicherte Verschieblichkeit des Gehäusedeckels 6 ermöglicht im Falle eines Frontalaufpralls des Fahrzeugs, daß die in den Fußraum der Fahrgastzelle hineinragenden Teile der Betätigungsvorrichtung 1 in die von der Stirnwand 4 aufgespannten Ebene vollständig abgesenkt werden können. Dies vermeidet in vorteilhafter Weise eine von der Betätigungsvorrichtung ausgehende Gefahr einer Fußverletzung nahezu vollständig. Die Signalleitungen 3.1 und 3.2 des Druckaufnehmers 3 sind durch den Gehäuseboden 7 in den Motorraum geführt und mit einem System 20 verbunden, in welchem die zur Erzeugung der erforderlichen Steuerspannung notwendigen Wandler und Verstärker sowie die zu aktivierende Brems- oder Kupplungsvorrichtung des Kraftfahrzeugs zusammengefaßt sind.

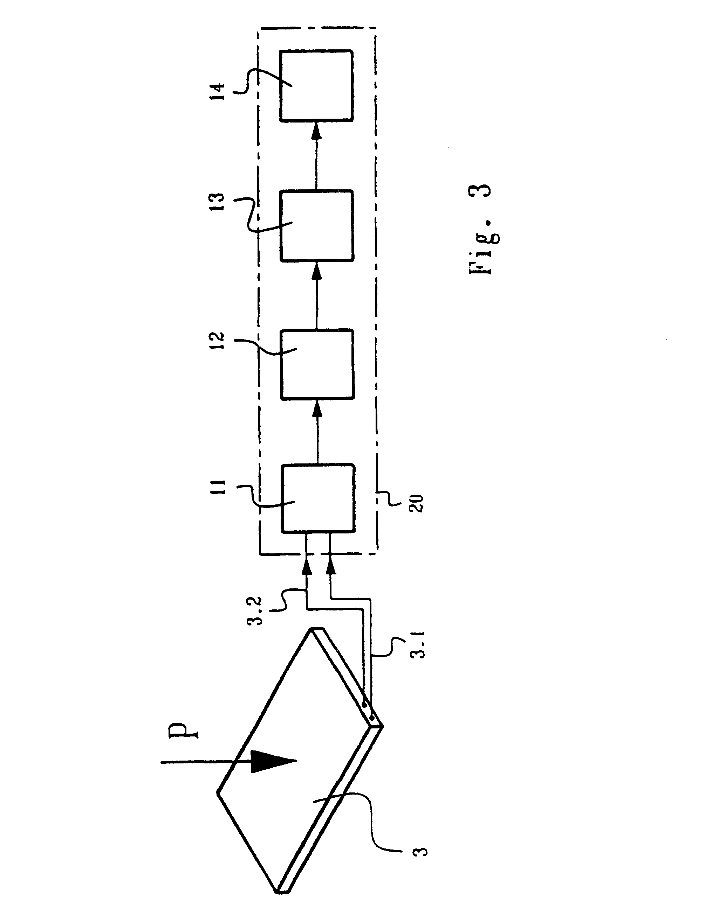

Das in Figur 3 dargestellte elektrische Blockschaltbild für die Steuerung einer Brems-oder Kupplungsvorrichtung eines Kraftfahrzeugs mittels einer erfindungsgemäßen Betätigungsvorrichtung zeigt den näheren Aufbau des Systems 20. Der mattenförmige Druckaufnehmer 3 ist druckvariabel ausgebildet und wird durch eine Flächenlast P beaufschlagt. Die Signalleitungen 3.1 und 3.2 stellen eine Verbindung zu einem elektrischen Schwingkreis 11 her, dessen Resonanzfrequenz durch die Parallelschaltung des Druckaufnehmers und dessen unterschiedliche Belastung variiert wird. Die sich daraus ergebende Spannungsschwankung wird in einem Verstärker 12 an den erforderlichen Eingangspegel eines Stellgliedes 13 angepaßt, um die Brems- oder Kupplungsvorrichtung 14 des Fahrzeuge zu aktivieren.

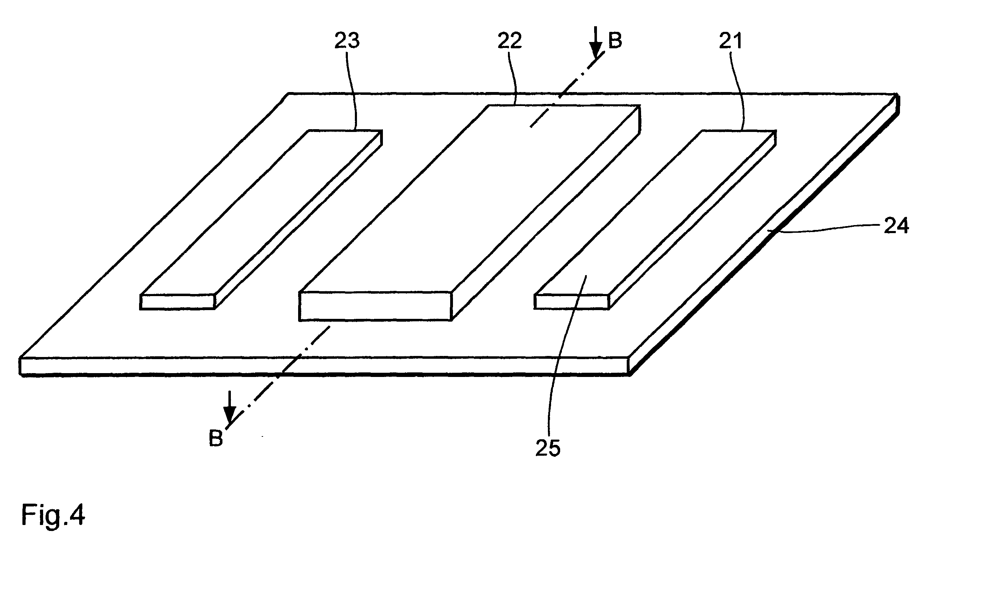

Figur 4 zeigt eine aus drei Betätigungsvorrichtungen 21; 22; 23 bestehende Betätigungsgruppe als perspektivische Ansicht des bevorzugten Ausführungsbeispiels. Die Betätigungsvorrichtungen 21; 22; 23 sind dabei in Form ihrer jeweiligen Signalwandler dargestellt. Die erste Betätigungsvorrichtung 21 dient der Betätigung eines Fahrzeugmotors, die zweite Betätigungsvorrichtung 22 der eines Bremssystems und die dritte Betätigungsvorrichtung 23 der einer Kupplung. Die Betätigungsvorrichtungen 21; 22; 23 gleichen sich dabei in ihrem konstruktiven Aufbau, wobei die zweite Betätigungsvorrichtung 22 deutlich größer ausgebildet ist als die anderen. Desweiteren ist der Abstand zwischen der zweiten Betätigungsvorrichtung 22 und der dritten Betätigungsvorrichtung 23 größer, als der zwischen der ersten Betätigungsvorrichtung 21 und der zweiten Betätigungsvorrichtung 22. Die Signalwandler der drei Betätigungsvorrichtungen 21; 22; 23 sind in einen Gesamtformkörper 24 integriert, wobei die Betätigungsflächen 25 der Betätigungsvorrichtungen in einer Oberfläche liegen. Der Gesamtformkörper 24 weist dabei parallel zu den Betätigungsflächen drei - in Figur 4 nicht sichtbare - rückseitige Öffnungen auf, durch die von den Signalwandlern ausgehende Zuleitungen durch den Gesamtformkörper 24 hindurch nach außen geführt werden. In nicht dargestellter Weise ist der Gesamtformkörper 24 in die den Fußraum in Fahrtrichtung begrenzende Stirnwand fahrerseitig in der Art eingefügt, daß die drei Betätigungsflächen 25 zum Fahrer weisen.

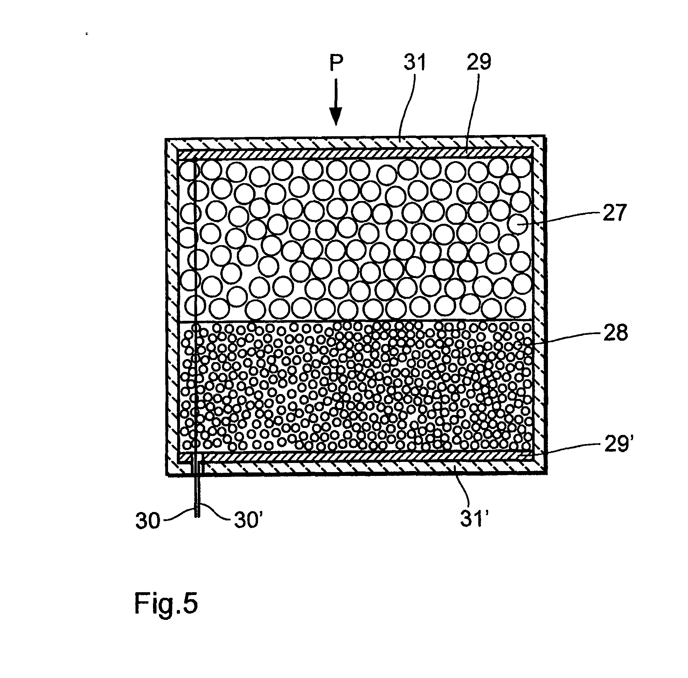

Der in Figur 5 detailiert dargestellte Signalwandler 26 einer beliebigen Betätigungsvorrichtung 21; 22; 23 weist einen aus zwei Teilformkörpem 27; 28 zusammengesetzten Formkörper auf. Die Teilformkörper 27; 28 bestehen jeweils aus einem elastischen Material und sind porös ausgebildet, wobei die Poren unregelmäßig angeordnet sind. In der gezeigten Darstellung sind die Poren des dem Fahrer zugewandten Teilformkörpers 27 größer als die des Teilformkörpers 28. Gleichzeitig ist der Elastizitätsmodul des den Teilformkörper 27 bildenden Materials größer als der des Materials des Teilformkörpers 28, so daß bei Anliegen einer Flächenkraft P senkrecht zur dem Fahrer zugewandten Oberfläche des Teilformkörpers 27 im wesentlichen nur dieser komprimiert wird. Auf den Teilformkörper 27 ist ein erster Kontaktbereich 29 aufgebracht, welcher sich über die gesamte, dem Fahrer zugewandte Oberfläche erstreckt und leitend mit dem Teilformkörper 27 verbunden ist. Der Kontaktbereich 29 ist weiterhin mit einer Zuleitung 30 versehen, die durch die Teilformkörper 27 und 28 hindurch aus dem Signalwandler 26 nach außen geführt ist. Ein zweiter Kontaktbereich 29' ist auf die dem Teilformkörper 27 abgewandte Oberfläche des Teilformkörpers 28 aufgebracht und gemäß dem ersten Kontaktbereich 29 mit dem Teilformkörper 28 und einer Zuleitung 30' leitend verbunden. Der aus den Teilformkörpem 27 und 28 zusammengesetzte Formkörper ist mit einem isolierenden Material in der Art eines Gehäuses umschlossen, wobei das Material im Bereich der die Kontaktbereiche 29; 29' bedeckenden Flächen 31; 31' steif und in den übrigen Flächen nachgiebig ausgebildet ist. Im Bereich 31' ist das isolierende Material mit einer Öffnung zur Herausführung der Zuleitungen 30; 30' versehen.

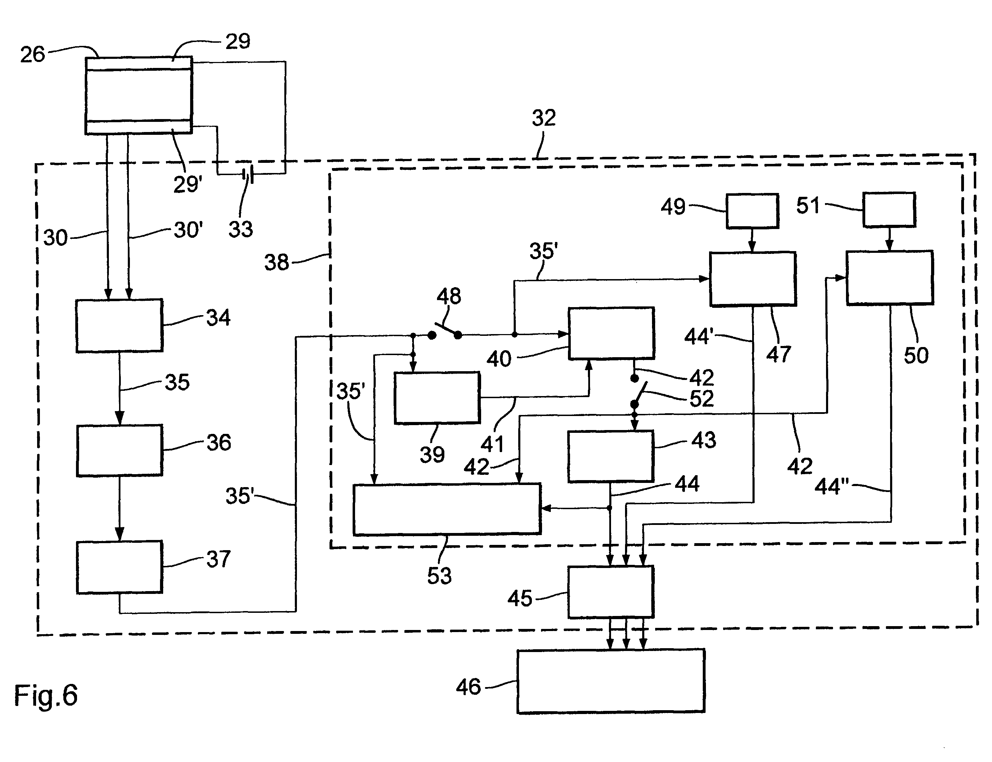

Dem Signalwandler 26 ist ein, mehrere Vorrichtungen aufweisender Meßwandler 32 nachgeordnet, dessen Eingänge gemäß dem in Figur 6 dargestellten Blockschaltbild über die Zuleitungen 30; 30' mit den beiden Kontaktbereichen 29; 29' des Signalwandlers 26 verbunden sind. Der Meßwandler 32 enthält eine Spannungsquelle 33, die zwischen dem ersten Kontaktbereich 29 und dem zweiten Kontaktbereich 29' eine im wesentlichen konstante elektrische Spannung anlegt. Desweiteren ist ein Wandler 34 vorgesehen, welcher eingangsseitig mit den Zuleitungen 30; 30' verbunden ist, und an dessen Ausgang eine analoge elektrische Kenngröße 35 abgegeben wird. Die Kenngröße 35 wird einem Eingangsverstärker 36 zugeführt, welcher die Kenngröße 35 in ihrer Amplitude heraufsetzt. Ein nachgeschalteter Analog-/Digitalwandler 37 nimmt die analoge Kenngröße 35 als Eingangssignal auf und gibt diese digitalisiert aus. Die digitalisierte Kenngröße 35' wird einem Funktionsgeber 38 zugeführt, wobei der Funktionsgeber 38 mehrere Vorrichtungen enthält. Im Rahmen dieser Vorrichtungen ist ein Speicher 39 vorgesehen, dem die Kenngröße 35' zugeführt wird. Der Funktionsgeber 38 weist eine Differenzierstufe 40 auf, welche die Kenngröße 35' sowie eine vom Speicher 39 ausgegebene vorherige Kenngröße 41 aufnimmt und eine Differenziergröße 42 als Maß für die zeitliche Änderung der Kenngröße 35 abgibt. Der Differenzierstufe 40 ist ein Linearisierungsglied 43 nachgeordnet, dem die Differenziergröße 42 zugeführt wird, und das ein erstes Steuersignal 44 abgibt, wobei das erste Steuersignal 44 mit dem Abstand oder der Änderung des Abstandes zwischen den beiden Kontaktbereichen 29; 29' in linearem Zusammenhang steht.

Der Meßwandler 32 enthält desweiteren eine Ausgangsstufe 45, die das erste Steuersignal 44 in seiner Amplitude heraufsetzt. Das Steuersignal 44 aktiviert ein Antriebs-oder Verzögerungsmittel 46.

Zur Steuerung des Antriebs-oder Verzögerungsmittels 46 in Abhängigkeit einer vorgegebenen Kenngröße ist eine erste Schwellwertstufe 47 vorgesehen, welche bei vorheriger Betätigung eines Schalters 48 ein zweites Steuersignal 44' ausgibt, das anstelle des ersten Steuersignals 44 dem Antriebs-oder Verzögerungsmittel 46 über die Ausgangsstufe 45 zugeführt wird. Zuvor wird der ersten Schwellwertstufe 47 ein vorbestimmter Kenngrößenschwellwert 49 übergeben. Die Schwellwertstufe 47 nimmt als Eingangssignal die digitale Kenngröße 35' auf und gibt das zweite Steuersignal 44' aus, das einen ersten Kennwert besitzt, wenn die digitale Kenngröße 35' größer oder gleich ist als der Kenngrößenschwellwert 49, und das einen zweiten Kennwert aufweist, wenn die Kenngröße 35' kleiner ist als der Kenngrößenschwellwert 49.

Zur Steuerung des Antriebs-oder Verzögerungsmittels 46 in Abhängigkeit einer vorgegebenen Differenziergröße ist eine zweite Schwellwertstufe 50 vorgesehen, welcher ein vorbestimmter Differenziergrößenschwellwert 51 zugeführt wird, wobei die zweite Schwellwertstufe 50 bei vorheriger Betätigung eines Schalters 52 ein drittes Steuersignal 40" ausgibt. Dieses liegt entsprechend dem ersten Steuersignal 40 bzw. dem zweiten Steuersignal 40' am Eingang des Antriebs-oder Verzögerungsmittels 46 an.

Der Funktionsgeber 38 weist weiterhin einen Tabellenspeicher 53 auf, dem die digitale Kenngröße 35' und/oder die Differenziergröße 42 sowie das Steuersignal 44 zugeführt werden, wobei in dem Tabellenspeicher 53 jedem Wert der jeweiligen Größe 35' und/oder der Größe 42 ein entsprechendes Steuersignal 44 zugeordnet wird.

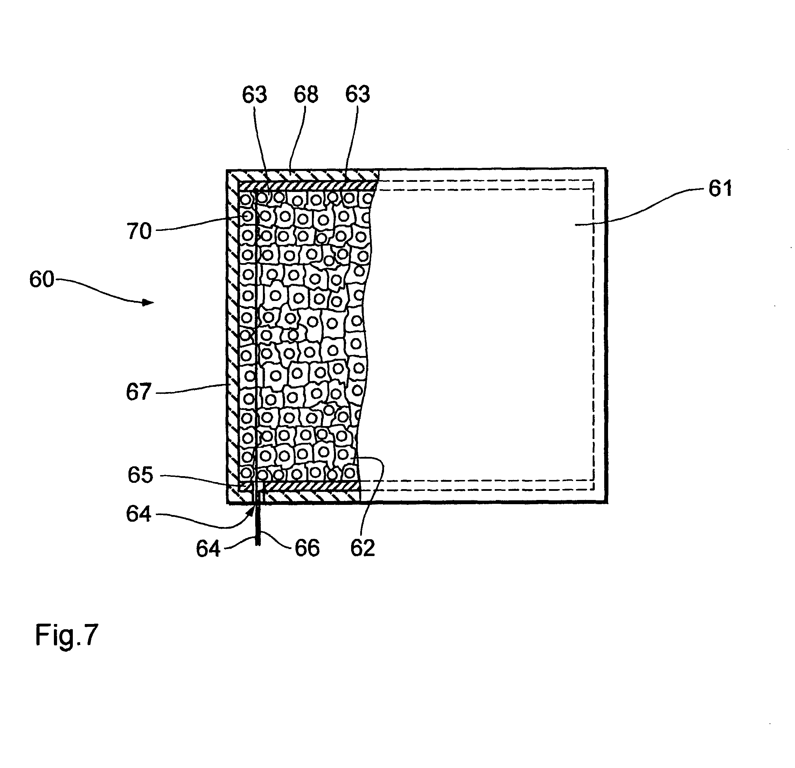

Der in Figur 7 detailiert dargestellte Signalwandler 60 einer beliebigen Betätigungsvorrichtung (vergleiche die Positionen 21, 22, 23 gemäß Figur 4) weist einen Formkörper 61 aus einem Cellpolyurethan oder Cellvulkulan auf, dessen elektrischer Widerstand sich bei einer Volumenkompression verringert.

Der Formkörper 61 ist porös ausgebildet, wobei die Poren 62 unregelmäßig angeordnet sind. Auf den Formkörper 61 ist ein erster Kontaktbereich 63 aufgebracht, welcher sich über die gesamte, dem Fahrer zugewandte Oberfläche erstreckt und leitend mit dem Formkörper 61 verbunden ist. Der Kontaktbereich 63 ist weiterhin mit einer Zuleitung 64 versehen, die durch den Formkörper 61 hindurch aus dem Signalwandler 60 nach außen geführt ist. Ein zweiter, dem ersten gegenüberliegend angeordneter, Kontaktbereich 65 des Formkörpers 61 ist mit einer Zuleitung 66 leitend verbunden. Der Formkörper 61 ist mit einem isolierenden Material in der Art eines Gehäuses umschlossen, wobei das Material im Bereich der die Kontaktbereiche 63 und 65 bedeckenden Wandungsbereiche 67 und 68 des Gehäuses steif und in den übrigen Wandungsbereichen nachgiebig ausgebildet ist. Somit kann ein lokal in dem ausgesteiften Bereich 68 ausgeübter Druck im wesentlichen gleichmäßig über den ausgesteiften Bereich verteilt in den Formkörper 61 eingeleitet werden.

Im Kontaktbereich 65 und in dem steifen Wandungsbereich 67 ist eine Öffnung 69 zum Herausführen der mit einem Meßwandler (vergleiche die Position 32 in Figur 6) zu verbindenden Zuleitungen 64 und 66 vorgesehen.

Die Zellstruktur des aus einem Elastomer bestehenden Formkörpers 61 ist durch eine Überlagerung zweier Strukturelemente gebildet. In den Poren 62 des Elastomers sind dazu Kugeln 70, bevorzugt Hohlkugeln, eingelagert, welche selbst kompressibel und elektrisch leitend ausgebildet sind.

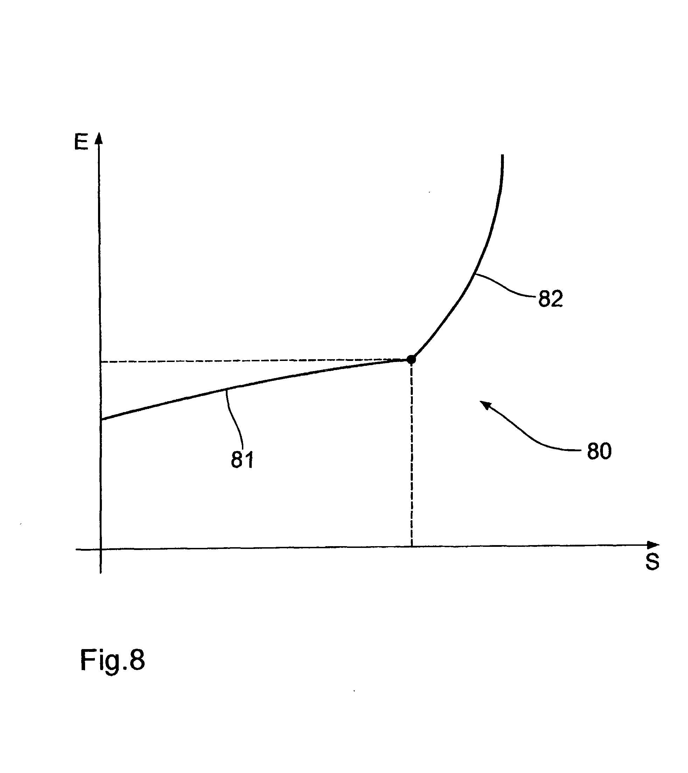

Aufgrund des Einschlusses von elastischen, kugelförmigen Elementen in den Poren des Elastomers, bevorzugt Cellpolyurethan oder Cellvulkulan, weist der Formkörper 61 eine spezielle Kompressionskennlinie 80 auf, welche in Figur 8 in schematisierter Form dargestellt ist.

Der Kurvenverlauf der Kompressionskennlinie 80 des Formkörpers (vergleiche die Position 61 in Figur 7), welcher beispielsweise eine kompressibel stoßverzehrende Fußraumauskleidung in einem Kraftfahrzeug mit einer maximalen Energieaufnahme im Endverformungsbereich bildet, weist einen Anfangsbereich 81 auf, wo der Formkörper fein dosierbar verformt werden kann und ein im wesentlichen linearer Zusammenhang zwischen aufgenommer Energie E und Kompressionshub S besteht.

Da die stoßverzehrende Fußraumauskleidung auf maximale Energieverzehrung im Endverformungsbereich 82 ausgelegt ist, besteht dagegen bei einem großen Kompressionshub S ein funktioneller Zusammenhang derart, daß die beim Komprimieren aufgenommene mechanische Energie E überproportionaler ansteigt.

Die Kompressionskennlinie 80 weist im Bereich der starken Kompression 82 einen im wesentlichen quadratischen oder exponentiellen Kennlinienverlauf auf.

Die Erfindung beschränkt sich in ihrer Ausführung nicht auf das vorstehend angegebene bevorzugte Ausführungsbeispiel.

## Patentansprüche

1. Betätigungsvorrichtung zum Ansteuern eines Antriebs-, Lenk- oder Verzögerungsmittels eines Kraftfahrzeugs mit einem ein vom Betätigungsweg abhängiges Steuersignal erzeugenden Signalwandler (26; 60), der aus einem elastisch und leitend ausgebildeten Formkörper besteht, der eine erste und eine zweite Außenfläche aufweist, die in einem Abstand zueinander angeordnet sind, und der versehen ist mit einem ersten elektrischen Kontaktbereich (29; 62), der sich über die erste äußere Fläche des Formkörpers erstreckt und einerseits mit dem Formkörper und andererseits mit einer ersten Zuleitung (30; 64) galvanisch leitend verbunden ist und einem zweiten elektrischen Kontaktbereich (29';63), der sich entlang der zweiten Fläche des Formkörpers erstreckt und einerseits mit dem Formkörper, und andererseits mit einer zweiten Zuleitung (30'; 65) galvanisch leitend verbunden ist, wobei der elektrische Widerstand des Formkörpers zwischen den beiden Kontaktbereichen (29, 29'; 62, 63) vom Abstand der beiden Kontaktbereiche (29, 29'; 62, 63) abhängig ist, und dass dem Signalwandler (26, 60) ein Messwandler (32) nachgeschaltet ist, dessen Eingänge über die Zuleitungen (30, 30'; 64, 65) mit dem ersten und dem zweiten Kontäktbereich (29, 29'; 62, 63) verbunden sind, und an dessen Ausgang ein Steuersignal (44) abnehmbar ist, weiches von dem elektrischen Widerstand des Formkörpers abhängig ist, **dadurch gekennzeichnet, dass** der Formkörper (61) eine Kompressionskennlinie (80) E = f(S) mit Bereichen unterschiedlicher Volumenkompression, insbesondere mit einem Bereich geringer Votumenkompression (81) und einem Bereich starker Volumenkompression (82) derart aufweist, dass im Bereich der geringen Volumenkompression ein im wesentlichen linearer und im Bereich der starken Volumenkompression ein überproportional nichtlinearer Zusammenhang zwischen dem Kompressionshub S und der beim Komprimieren aufgenommenen mechanischen Energie E besteht.

2. Betätigungsvorrichtung nach Anspruch 1, **dadurch gekennzeichnet, dass** der Messwandler (32) eine Spannungsquelle (33) aufweist, die zwischen dem ersten und dem zweiten elektrischen Kontaktbereich (29; 29') eine im wesentlichen konstante elektrische Spannung anlegt, oder dass der Messwandler (32) eine Stromquelle enthält, die zwischen dem ersten und dem zweiten elektrischen Kontaktbereich (29; 29') einen im wesentlichen konstanten Strom hervorruft.

3. Betätigungsvorrichtung nach Anspruch 1, **dadurch gekennzeichnet, dass** der Messwandler (32) einen Eingangsverstärker (36) enthält, der eingangsseitig mit den Zuleitungen verbunden (30; 30') ist.

4. Betätigungsvorrichtung nach Anspruch 1, **dadurch gekennzeichnet, dass** der Messwandler (32) einen Analog-/Digitalwandler (37) aufweist, der die analoge Kenngröße (35) als Eingangssignal aufnimmt und sie digitalisiert.

5. Betätigungsvorrichtung nach Anspruch 1, **dadurch gekennzeichnet, dass** der Messwandler (32) einen Funktionsgeber (38) aufweist, der die analoge (35) oder die digitale Kenngröße (35') als Eingangssignal aufnimmt, und an dessen Ausgang das mit der Kenngröße (35, 35') in eindeutigem funktionalem Zusammenhang stehende Steuersignal (44) abnehmbar ist.

6. Betätigungsvorrichtung nach Anspruch 5, **dadurch gekennzeichnet, dass** der Funktionsgeber (38) eine Differenzierstufe (40) aufweist, die die aktuelle Kenngröße (35, 35') und die aus dem Speicher (39) abgerufene vorherige Kenngröße (41) als Eingangssignale aufnimmt, und eine Differenziergröße (42), die ein Maß für die zeitliche Änderung der Kenngröße (35) darstellt, an ihrem Ausgang ausgibt.

7. Betätigungsvorrichtung nach Anspruch 6, **dadurch gekennzeichnet, dass** der Funktionsgeber (38) ein Linearisierungsglied (43) bildet, das die Kenngröße (35, 35') oder die Differenziergröße (42) als Eingangssignal aufnimmt, und an seinem Ausgang ein Steuersignal (44) abnehmbar ist, das mit dem Abstand oder der Änderung des Abstandes zwischen den beiden Kontaktbereichen (29, 29') in linearem Zusammenhang steht.

8. Betätigungsvorrichtung nach Anspruch 6, **dadurch gekennzeichnet, dass** der Funktionsgeber (38) eine erste Schwellwertstufe (47) aufweist, die die Kenngröße (35, 35') als Eingangssignal aufnimmt, und an dessen Ausgang ein Steuersignal (44') abnehmbar ist, das einen ersten Kennwert besitzt, wenn die Kenngröße (35, 35') größer oder gleich ist als ein vorbestimmter Kenngrößenschwellwert (49), und das einen zweiten Kennwert besitzt, wenn die Kenngröße (35, 35') kleiner ist als der vorbestimmte Kenngrößenschwellwert (49).

9. Betätigungsvorrichtung nach Anspruch 6, **dadurch gekennzeichnet, dass** der Funktionsgeber (38) eine zweite Schwellwertstufe.(50) aufweist, die die Differenziergröße (42) als Eingangssignal aufnimmt, und an dessen Ausgang ein Steuersignal (44") abnehmbar ist, das einen konstanten ersten Differenzierwert besitzt, wenn die Differenziergröße (42) größer oder gleich ist als ein vorbestimmter Differenziergrößenschwellwert (51), und das einen zweiten Differenzierwert besitzt, wenn die Differenziergröße (42) kleiner ist als der vorbestimmte Differenziergrößenschwellwert (51).

10. Betätigungsvorrichtung nach Anspruch 6, **dadurch gekennzeichnet, dass** der Funktionsgeber (38) einen Tabellenspeicher (53) aufweist, in dem jedem digitalen Wert der Kenngröße (35') und/oder der Differenziergröße (42) ein entsprechender Wert des Steuersignals (44) zuordnet ist.

11. Betätigungsvorrichtung nach Anspruch 1, **dadurch gekennzeichnet, dass** der das elastische Material des Form körpers porös ausgebildet ist.

12. Betätigungsvorrichtung nach Anspruch 1, **dadurch gekennzeichnet, dass** der Formkörper (61) als kompressibel stoßverzehrende Fußraumauskleidung ausgebildet ist, welche bei einer Volumenkompression ihren elektrischen Widerstand verringert.

13. Betätigungsvorrichtung nach Anspruch 12, **dadurch gekennzeichnet, dass** der Formkörper (61) aus einem Cellpolyurethan oder einem Cellvulkulan besteht.

14. Betätigungsvorrichtung nach Anspruch 1, **dadurch gekennzeichnet, dass** der Formkörper Einlagerungen, insbesondere in Form von elektrisch leitenden Kugeln oder Hohlkugeln (70) aufweist, welche insbesondere ebenfalls kompressibel ausgebildet sind.

15. Betätigungsvorrichtung nach Anspruch 1, **dadurch gekennzeichnet, dass** die Kompressionskennlinie (80) im Bereich der starken Volumenkompression (82) einen im wesentlichen quadratischen oder exponentiellen Kennlinienverlauf aufweist.

16. Betätigungsvorrichtung nach Anspruch 1, **dadurch gekennzeichnet, dass** der Signalwandler (26) von einem isolierenden Material umschlossen ist, welches im Bereich/in den Bereichen (31, 31') des ersten und/oder zweiten Kontaktbereichs (29, 29') steif ausgebildet ist, so dass ein lokal in dem ausgesteiften Bereich ausgeübter Druck im wesentlichen gleichmäßig über den ausgesteiften Bereich (31, 31') verteilt in den Formkörper eingeleitet wird, und in den übrigen Bereichen nachgiebig ausgebildet ist.

17. Betätigungsvorrichtung nach Anspruch 1, **dadurch gekennzeichnet, dass** die Oberfläche des Signalwandlers in einem der Betätigungsperson zugewandten Bereich (26) eine Oberfläche mit erhöhtem Reibbeiwert oder einer an die Sohle der Betätigungsperson angepassten Ausnehmung versehen ist, so dass diese einen gegen seitliche Verschiebung gesicherten Halt findet.

18. Betätigungsvorrichtung nach Anspruch 1, **dadurch gekennzeichnet, dass** der Formkörper aus mindestens zwei Teilformkörpern (27, 28) besteht, die in einer Richtung senkrecht zu einer Verbindungslinie zwischen dem ersten (29) bzw. dem zweiten Kontaktbereich (29') leitend übereinander angeordnet sind, wobei die Elastizitätsmodule der Materialien der Teilformkörper (27, 28) unterschiedlich groß sind, und die Teilformkörper (27, 28) entlang der Verbindungslinie unterschiedliche Ausdehnungen aufweisen, so dass ein als Druckpunkt bezeichneter Abstand der beiden Kontaktbereiche (29, 29') auftritt, an dem nur einer der beiden Teilformkörper (27, 28) im wesentlichen vollständig komprimiert ist.

19. Befätigungsvorrichtung nach Anspruch 1, **dadurch gekennzeichnet, dass** Mittel vorgesehen sind, die die Ableitung der Änderung des elektrischen Widerstandes erfassen, und die bei einer schnelleren Änderung des elektrischen Widerstandes die Beschleunigung des Kraftfahrzeuges erhöhen, so dass ein Kick-down Effekt erzeugbar ist.

20. Betätigungsvorrichtung nach Anspruch 1, **dadurch gekennzeichnet, dass** sie Teil einer Gruppe von mehreren Betätigungsvorrichtungen (21, 22, 23) ist, die in einen Gesamtformkörper (24) integriert sind, wobei die Betätigungsflächen (25) der drei Betätigungsvorrichtungen (21, 22, 23) in einer Oberfläche des Gesamtformkörpers (24) bedienbar so nebeneinander liegen, dass die Betätigungsfläche (25) der ersten Betätigungsvonichtung (21) rechts, die Betätigungsfläche der zweiten Betätigungsvorrichtung (22) in der Mitte, und die Betätigungsfläche der dritten Betatigungsvorrichtung (23) links angeordnet ist.

21. Betätigungsvorrichtung nach Anspruch 20, **dadurch gekennzeichnet, dass** die Betätigungsgruppe in eine, den Fahrgast- vom Motorraum abtrennende Stirnwand eingefügt ist, wobei die drei Betätigungsflächen (25) zum Fahrer weisen.

## Claims

1. Actuating device for controlling a drive, steering or delay means of a motor vehicle comprising a signal converter (26; 60) generating a control signal dependent on the actuating path and consisting of an elastic and conductive mould part comprising a first and a second outer face arranged at a spacing from one another, and which is provided with a first electric contact region (29; 62) extending over the first outer face of the mould part and electrically connected, on the one hand to the mould part and, on the other hand to a first feed line (30; 64) and a second electric contact region (29'; 63) extending along the second face of the mould part and electrically connected, on the one hand, to the mould part and, on the other hand, to a second feed line (30'; 65), the electric resistance of the mould part between the two contact regions (29, 29'; 62, 63) being dependent on the spacing of the two contact regions (29, 29'; 62, 63), and in that connected downstream of the signal converter (26, 60) is a measuring transducer (32), of which the inputs are connected via the feed lines (30, 30'; 64, 65) to the first and the second contact region (29, 29'; 62, 63), and at the output of which a control signal (44) can be picked up, which is dependent on the electric resistance of the mould part, **characterised in that** the mould part (61) has a compression characteristic curve (80) E = f(S) with regions of different volume compression, in particular with a region of low volume compression (81) and a region of high volume compression (82) such that in the region of the low volume compression there is a substantially linear correlation and in the region of the high volume compression a superproportional non-linear correlation between the compression stroke S and the mechanical energy E absorbed during compression.

2. Actuating device according to claim 1, **characterised in that** the measuring transducer (32) has a voltage source (33) applying a substantially constant electric voltage between the first and the second electric contact region (29; 29'), or **in that** the measuring transducer (32) contains a current source causing a substantially constant current between the first and the second electric contact region (29; 29').

3. Actuating device according to claim 1, **characterised in that** the measuring transducer (32) contains an input amplifier (36) connected at the input side to the feed lines (30; 30').

4. Actuating device according to claim 1, **characterised in that** the measuring transducer (32) comprises an analogue-to-digital converter (37) which receives the analogue characteristic variable (35) as an input signal and digitises it.

5. Actuating device according to claim 1, **characterised in that** the measuring transducer (32) comprises a function generator (38) receiving the analogue (35) or the digital characteristic variable (35') as an input signal and at the output of which the control signal (44), in a clear functional correlation to the characteristic variable (35, 35'), can be picked up.

6. Actuating device according to claim 5, **characterised in that** the function generator (38) has a differentiating stage (40) receiving the current characteristic variable (35, 35') and the previous characteristic variable (41) retrieved from the memory (39) as input signals, and outputs a differentiating variable (42), which is a measure of the change over time of the characteristic variable (35), at its output.

7. Actuating device according to claim 6, **characterised in that** the function generator (38) forms a linearisation member (43) receiving the characteristic variable (35, 35') or the differentiating variable (42) as an input signal, and at its output a control signal (44) can be picked up which has a linear correlation to the spacing or the change in spacing between the two contact regions (29, 29').

8. Actuating device according to claim 6, **characterised in that** the function generator (38) has a first threshold stage (47) receiving the characteristic variable (35, 35') as an input signal and at the output of which a control signal (44') can be picked up which has a first characteristic value when the characteristic variable (35, 35') is greater than or equal to a predetermined characteristic variable threshold (49), and has a second characteristic value when the characteristic variable (35, 35') is smaller than the predetermined characteristic variable threshold (49).

9. Actuating device according to claim 6, **characterised in that** the function generator (38) has a second threshold stage (50) receiving the differentiating variable (42) as an input signal, and at the output of which a control signal (44'') can be picked up which has a constant first differentiating value when the differentiating variable (42) is greater than or equal to a predetermined differentiating variable threshold (51), and has a second differentiating value when the differentiating variable (42) is smaller than the predetermined differentiating variable threshold (51).

10. Actuating device according to claim 6, **characterised in that** the function generator (38) has a table memory (53) in which a corresponding value of the control signal (44) is associated with each digital value of the characteristic variable (35') and/or the differentiating variable (42).

11. Actuating device according to claim 1, **characterised in that** the elastic material of the mould part is porous.

12. Actuating device according to claim 1, **characterised in that** the mould part (61) is designed as a compressible, impact-absorbing foot space lining which reduces its electrical resistance in the event of a volume compression.

13. Actuating device according to claim 12, **characterised in that** the mould part (61) consists of a cellpolyurethane or a cellvulkulan.

14. Actuating device according to claim 1, **characterised in that** the mould part comprises inclusions, in particular in the form of electrically conductive spheres or hollow spheres (70) which, in particular, are also designed so as to be compressible.

15. Actuating device according to claim 1, **characterised in that** the compression characteristic curve (80) in the region of the high volume compression (82) has a substantially square or exponential characteristic curve course.

16. Actuating device according to claim 1, **characterised in that** the signal converter (26) is surrounded by an insulating material which is rigid in the region/regions (31, 31') of the first and/or second contact region (29, 29') so a local pressure exerted in the reinforced region is substantially uniformly introduced into the mould part via the reinforced region (31, 31') and is resiliently designed in the remaining regions.

17. Actuating device according to claim 1, **characterised in that** in a region (26) facing the operator, the surface of the signal converter is provided with a surface with an increased coefficient of friction or a recess adapted to the sole of the operator, so this is securely held against lateral displacement.

18. Actuating device according to claim 1, **characterised in that** the mould part consists of at least two partial mould parts (27, 28) arranged conductively one above the other between the first (29) and the second contact region (29') in a direction perpendicular to a connecting line, the moduli of elasticity of the materials of the partial mould parts (27, 28) being different sizes and the partial mould parts (27, 28) having different extensions along the connecting line, so a spacing between the two contact regions (29, 29') is produced, which is called a pressure point, and at which only one of the two partial mould parts (27, 28) is substantially fully compressed.

19. Actuating device according to claim 1, **characterised in that** means are provided which detect the differentiation in the change in the electric resistance and which increase the acceleration of the motor vehicle in the event of a relatively rapid change in the electric resistance, so a kick-down effect can be generated.

20. Actuating device according to claim 1, **characterised in that** it is part of a group of a plurality of actuating devices (21, 22, 23) integrated in an overall mould part (24), the actuating faces (25) of the three actuating devices (21, 22, 23) being located side by side in a surface of the overall mould part (24) so as to be operable such that the actuating face (25) of the first actuating device (21) is arranged on the right, the actuating face of the second actuating device (22) in the centre, and the actuating face of the third actuating device (23) on the left.

21. Actuating device according to claim 20, **characterised in that** the actuating group is inserted in an end wall separating the passenger space from the engine space, the three actuating faces (25) pointing toward the driver.

## Revendications

1. Dispositif d'actionnement pour la commande d'un moyen d'entraînement, de braquage ou de décélération d'un véhicule automobile, comportant un convertisseur de signaux (26; 60), qui produit un signal de commande qui dépend de la distance d'actionnement et qui est constitué par un corps moulé agencé de manière à être élastique et conducteur et qui possède les première et seconde faces extérieures, qui sont disposées à une certaine distance l'une de l'autre, et qui est équipé d'une première plage de contact électrique (29; 62) qui s'étend sur la première face extérieure du corps moulé et est relié d'une manière galvaniquement conductrice d'une part au corps moulé et d'autre part à une première ligne d'alimentation (30; 64), et par une seconde plage de contact électrique (29'; 63) qui s'étend le long de la seconde face du corps moulé et est relié d'une manière galvaniquement conductrice d'une part au corps moulé et d'autre part à une seconde ligne d'alimentation (30'; 65), la résistance électrique du corps moulé entre les deux plages de contact (29, 29'; 62, 63) dépendant de la distance entre les deux plages de contact (29, 29'; 62, 63) et qu'en aval du convertisseur de signaux (26, 60) est branché un transducteur de mesure (32), dont les entrées sont reliées par l'intermédiaire des lignes d'alimentation (30, 30'; 64, 65) aux première et seconde plages de contact (29, 29'; 62, 63) et sur la sortie de laquelle peut être prélevé un signal de commande (44), qui dépend de la résistance électrique du corps moulé, **caractérisé en ce que** le corps moulé (61) possède une courbe caractéristique de compression (80) E = f(S) comportant des zones avec des compressions différentes de volume, notamment avec une zone à faible compression de volume (80) et une zone à compression élevée de volume (82) de telle sorte que dans la zone de la faible compression de volume il existe une relation essentiellement linéaire et dans la zone de compression élevée de volume il existe une relation non linéaire et plus que proportionnelle entre la course de compression S et l'énergie mécanique E absorbée lors de la compression.

2. Dispositif d'actionnement selon la revendication 1, **caractérisé en ce que** le transducteur de mesure (32) comporte une source de tension (33), qui applique entre les première et seconde plages de contact électriques (29; 29') une tension électrique essentiellement constante, ou que le transducteur de mesure (32) contient une source de courant, qui fait apparaître un courant essentiellement constant entre la première plage de contact électrique et la seconde plage de contact électrique (29, 29').

3. Dispositif d'actionnement selon la revendication 1, **caractérisé en ce que** le transducteur de mesure (32) contient un amplificateur d'entrée (36), qui est relié (30; 30') côté entrée aux lignes d'alimentation.

4. Dispositif d'actionnement selon la revendication 1, **caractérisé en ce que** le transducteur de mesure (32) comporte un convertisseur analogique / numérique (37), qui enregistre la grandeur caractéristique analogique (35) en tant que signal d'entrée et la numérise.

5. Dispositif d'actionnement selon la revendication 1, **caractérisé en ce que** le transducteur de mesure (32) possède un générateur de fonction (38), qui enregistre la grandeur caractéristique analogique (35) ou la grandeur caractéristique numérique (35) en tant que signal d'entrée et sur la sortie duquel peut être prélevé le signal de commande (44) qui est relié selon une relation fonctionnelle nette à la grandeur caractéristique (35, 35').

6. Dispositif d'actionnement selon la revendication 5, **caractérisé en ce que** le générateur de fonction (38) comporte un étage différentiateur (40), qui enregistre la grandeur caractéristique actuelle (35, 35') et la grandeur caractéristique précédente (41) appelé à partir de la mémoire (39) en tant que signaux d'entrée, et délivre à sa sortie une grandeur différentiée (42), qui représente une mesure de la variation dans le temps de la grandeur caractéristique (35).

7. Dispositif d'actionnement selon la revendication 6, **caractérisé en ce que** le générateur de fonction (38) forme un organe de linéarisation (43), qui enregistre la grandeur caractéristique (35, 35') ou la grandeur de différenciation (42) en tant que signal d'entrée et sur la sortie duquel peut être prélevé un signal de commande (44), qui dépend selon une relation linéaire de la distance ou de la variation de la distance entre les deux plages de contact (29, 29').

8. Dispositif d'actionnement selon la revendication 6, **caractérisé en ce que** le générateur de fonction (38) possède un premier étage à valeur de seuil (47), qui enregistre la grandeur (35, 35') en tant que signal d'entrée, et sur la sortie duquel peut être prélevé un signal de commande (44'), qui possède une première valeur caractéristique lorsque la grandeur caractéristique (35, 35') est supérieure ou égale à une valeur de seuil prédéterminée (49) de la grandeur caractéristique, et qui possède une seconde valeur caractéristique lorsque la grandeur caractéristique (35, 35') est inférieure à la valeur de seuil prédéterminée (49) de la grandeur caractéristique.

9. Dispositif d'actionnement selon la revendication 6, **caractérisé en ce que** le générateur de fonction (38) possède un second étage à valeur de seuil (50), qui reçoit la grandeur de différenciation (42) en tant que signal d'entrée et à la sortie duquel peut être prélevé un signal de commande (44"), qui possède une première valeur constante de différenciation, lorsque la grandeur de différenciation (42) est supérieure ou égale à une valeur de seuil prédéterminée (51) de grandeur de différenciation, et qui possède une seconde valeur de différenciation, lorsque la grandeur (42) de différenciation est inférieure à la valeur de seuil prédéterminée (51) de la grandeur de différenciation.

10. Dispositif d'actionnement selon la revendication 6, **caractérisé en ce que** le générateur de fonction (38) comporte une mémoire de tableau (53), dans laquelle à chaque valeur numérique de la grandeur caractéristique (35') et/ou de la grandeur de différenciation (42) est associée une valeur correspondante du signal de commande (44).

11. Dispositif d'actionnement selon la revendication 1, **caractérisé en ce que** le matériau élastique du corps moulé est agencé de manière à être poreux.

12. Dispositif d'actionnement selon la revendication 1, **caractérisé en ce que** le corps moulé (61) est agencé sous la forme d'un habillage de l'espace au niveau des pieds, qui absorbe les chocs d'une manière compressible et dont la valeur résistive diminue dans le cas d'une compression de volume.

13. Dispositif d'actionnement selon la revendication 12, **caractérisé en ce que** le corps moulé (61) est constitué par du polyuréthane cellulaire ou par du vulkulan cellulaire.

14. Dispositif d'actionnement selon la revendication , **caractérisé en ce que** le corps moulé comporte des inserts, notamment sous la forme de billes ou de sphères creuses électriquement conductrices (70), qui sont agencées notamment également de manière à être compressibles.

15. Dispositif d'actionnement selon la revendication 1, **caractérisé en ce que** la courbe caractéristique de compression (80) comporte, dans la zone la compression élevée de volume (82), une allure de courbe caractéristique essentiellement quadratique ou exponentielle.

16. Dispositif d'actionnement selon la revendication 1, **caractérisé en ce que** le convertisseur de signaux (66) est entouré par un matériau isolant, qui est agencé de manière à être rigide dans la zone / dans les zones (31, 31') de la première et/ou de la seconde plages de contact (29, 29') de sorte qu'une compression appliquée localement dans la partie rigidifiée est transférée au corps moulé en étant répartie d'une manière essentiellement uniforme dans la zone rigidifiée (31, 31'), et est agencée en étant flexible dans les autres zones.

17. Dispositif d'actionnement selon la revendication 1, **caractérisé en ce que** la surface du convertisseur de signaux comporte, dans une zone (26) tournée vers l'opérateur, une surface ayant un coefficient de frottement accru ou un évidement adapté à la semelle de l'opérateur, de sorte qu'un déplacement latéral de l'opérateur est empêché de façon sûre.

18. Dispositif d'actionnement selon la revendication 1, **caractérisé en ce que** le corps moulé est constitué par au moins deux corps moulés partiels (27, 28), qui sont disposés l'un au-dessus de l'autre avec guidage dans une direction perpendiculaire à une droite reliant la première plage de contact (29) et la seconde plage de contact (29'), les modules d'élasticité des matériaux des corps moulés partiels (27, 28) ayant des valeurs différentes, et les corps moulés partiels (27, 28) possédant des étendues différentes le long de la ligne de jonction de sorte qu'il apparaît une distance entre les deux plages de contact (29, 29'), qui est désigné comme étant un point de pression et au niveau duquel seul l'un des deux corps moulés partiels (27, 28) est comprimé essentiellement complètement.

19. Dispositif d'actionnement selon la revendication 1, **caractérisé en ce qu'**il est prévu des moyens qui détectent la dérivée de la variation de la valeur résistive électrique et qui, dans le cas d'une variation rapide de la valeur résistive électrique, augmentent l'accélération du véhicule automobile de sorte que l'on peut obtenir un effet de kick-down.

20. Dispositif d'actionnement selon la revendication 1, **caractérisé en ce qu'**il fait partie d'un groupe de plusieurs dispositifs d'actionnement (21, 22, 23), qui sont intégrés dans un corps moulé d'ensemble (24), les faces d'actionnement (25) des trois dispositifs d'actionnement (21, 22, 23) étant disposées côte-à-côte de manière à pouvoir être activées dans une surface du corps moulé d'ensemble (24) de telle sorte que la face d'actionnement (25) du premier dispositif d'actionnement (21) est disposée à droite, la face d'actionnement du second dispositif d'actionnement (22) est disposée au centre et la surface d'actionnement du troisième dispositif d'actionnement (23) est disposée à gauche.

21. Dispositif d'actionnement selon la revendication 20, **caractérisé en ce que** le groupe d'actionnement est inséré dans une paroi frontale qui sépare l'habitacle de l'espace moteur, les trois faces d'actionnement (25) étant tournées vers le conducteur.
